# NEW EUROPEAN PATENT SPECIFICATION

(11) **EP 0 713 883 B2**
(45) Date of publication and mention of the opposition decision: **29.10.2008**
(45) Mention of the grant of the patent: 01.12.1999
(21) Application number: 95921149.1
(22) Date of filing: 09.06.1995
(51) Int. Cl.: C08F 10/10, C08F 2/38, C08F 4/00, C08F 8/00

(54) **PROCESS FOR PRODUCING ISOBUTENE POLYMER**
VERFAHREN ZUR HERSTELLUNG VON ISOBUTENPOLYMER
PROCEDE DE PRODUCTION D'UN POLYMERE D'ISOBUTENE

(30) Priority: 09.06.1994 JP 15064694
(43) Date of publication of application: 29.05.1996
(73) Proprietor: KANEGAFUCHI KAGAKU KOGYO KABUSHIKI KAISHA, Kita-ku, Osaka-shi, Osaka 530 (JP)
(72) Inventor: MAEDA, Takuya, Tarumi-ku, Kobe-shi, Hyogo 655 (JP); TAMURA, Masanobu, Kobe-shi, Hyogo 654-01 (JP); WACHI, Shun, Takasago-shi, Hyogo 676 (JP)
(74) Representative: Vossius & Partner
(86) International application number: PCT/JP1995/001164
(87) International publication number: WO 1995/033774

(56) References cited:
- EP-A- 0 264 214
- EP-A- 0 341 012
- EP-A- 0 397 081
- EP-A- 0 452 875
- WO-A-94/19380
- JP-A- 2 036 204
- JP-A- 2 245 004
- JP-A- 63 205 305
- US-A- 4 276 394
- US-A- 4 946 899
- US-A- 5 169 914
- US-A- 5 247 021
- DATABASE WPI Section Ch, Week 9045 Derwent Publications Ltd., London, GB; Class A17, AN 90-339137 XP002012265 & JP-A-02 245 004 ( KANEGAFUCHI CHEM KK) , 28 September 1990
- Kaszas et al., macromol. Chem., Macromol.Symp., 1988, 13/14, p. 473-493
- Puskas et al., J. macromol. Sci. Chem.A, 18(9), pp. 1229.1244, 1982-1983
- Fodor et al., Journal of Macromolecular Science, Chemistry, 1987, A24(7), pp. 735-747

## Description

### TECHNICAL FIELD:

The present invention relates to a process for preparing an isobutene polymer. More particularly, the present invention relates to an advantageous process for preparing an isobutene polymer having functional groups at the terminals in the presence of an initiator.

The polymer prepared by the process disclosed herein exhibits excellent weathering resistance and gas barrier properties and good electrical insulating properties, and thus can be advantageously used as a starting material of coating agent, sealing agent, sealing compound for electronic material, etc.

### TECHNICAL BACKGROUND:

Among telechelic polymers, i.e., polymers having functional groups at a plurality of terminals, polymers having vinyl groups at both terminals are useful as starting materials of photo-setting resins, ultraviolet(UV)-curing resins, electron radiation-curing resins, sealing compounds for electronics, adhesives, modifiers, coating materials, sealing compound for building, etc.

A functional group-terminated polymer (terminal functional polymers), e.g., isobutene polymer having a chlorine atom bonded to a tertiary carbon at both terminals has been known to be produced by an inifer process which comprises the cationic polymerization of isobutene in the presence of 1,4-bis(α-chloroisopropyl)benzene (hereinafter, simply referred to as "p-DCC") as an initiator/chain transfer agent and boron trichloride as a catalyst (cf. U.S. Patent 4,276,394).

Further, many reports have been made by Kennedy et al., that when the foregoing cationic polymerization reaction is effected in a solvent containing a halogenated hydrocarbon (e.g., methyl chloride, methylene chloride) in the presence of an electron donor, an isobutene polymer having a small Mw/Mn value as determined by GPC, i.e., uniform molecular weight can be obtained (Journal of Macromolecular Science Chemistry, A18 (1), 25 (1982), Polymer Bulletin, 20, 413 (1988), Polymer Bulletin, 26, 305 (1991), JP-A-1-318014 (the term "JP-A" as used herein means an "unexamined published Japanese patent application")).

The inventors made extensive studies of process for the production of an isobutene polymer by the foregoing inifer process on a commercial basis. In the course of the studies, the following problems were made clear.
(1) Since the polymerization reaction is normally effected at low temperatures, the solvent used exhibits a reduced dissolving power. Accordingly, when the monomer concentration is increased to enhance the yield, the resulting polymer separates out. Thus, the monomer concentration can hardly be enhanced. Referring to the process for the preparation of butyl rubber, etc., examples of the preparation process which comprises the precipitation of the resulting polymer have been reported. However, the precipitation of the polymer during the polymerization reaction must be avoided to reduce the molecular weight distribution of the polymer.
(2) The polymerization reaction rate is high. Therefore, when the monomer concentration is increased, the resulting heat generation during polymerization makes it difficult to control the reaction temperature. If the rise in the reaction temperature is too great, undesirable side reactions such as proton-initiated reaction and chain transfer reaction occur, increasing the molecular weight distribution (Mw/Mn) of the polymer and making it difficult to control the terminal functional groups. This disadvantageously produces a mixture of polymers having the following three terminal groups:
   Chlorine terminal: -CH₂C(CH₃)₂Cl
   Isopropenyl terminal: -CH₂C(CH₃)=CH₂
   Internal olefin terminal: -CH=C(CH₃)₂
      In particular, if p-DCC is used, the rise in the monomer concentration gives a problem of subsidiary production of a large amount of an indanyl group having the following structure: 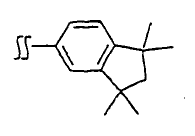
(3) Besides the effects on the properties of the polymer thus produced, the problem of toxicity caused by the use of a halogenic solvent arises. Most halogenated hydrocarbons are highly toxic. Halogenated hydrocarbons have recently drawn attention from the standpoint of environmental pollution. Thus, the exhaust of halogenated hydrocarbons out of the system is now under severe regulation. The use of a halogenated hydrocarbon which has heretofore been used in the polymerization reaction, such as methylene chloride and methyl chloride presents problems of deactivation of the catalyst after the polymerization reaction and disposal of waste water or waste solvent containing halogenated hydrocarbon generated at the rinsing step. In order to satisfy the regulation on exhaust, large scale facilities and high disposal cost are required. The regulation will likely be severer in the future, requiring further countermeasures.

It has been widely known that when the temperature of the polymerization reaction is raised, carbocations at the growth terminal become instable, causing side reactions such as chain transfer and production-of indanyl group (J.P. Kennedy, E. Marechal, Carbocationic Polymerization, John Wiley & Sons (1982)).

The rise in the monomer concentration gives a greater rise in the temperature of the polymerization reaction. Therefore, the monomer concentration used in examples which have been reported is low and normally not more than 1 mol/ℓ (Polym. Bull., 21, 5 (1989), Polym. Bull., 21, 125 (1989), Polym. Bull., 21, 273 (1989), Polym. Bull., 21, 293 (1989), Polym. Bull., 26, 305 (1991), Polym. Bull., 29, 239 (1992)).

However, from the industrial viewpoint, it has been keenly desired to raise the weight of polymer which can be produced per unit volume.

Since carbocations as growth seeds must be stable in the polymerization of isobutene in a living cation system, it has heretofore been considered preferred to effect the reaction in a solvent having some polarity at a temperature low enough to allow cations to be present in a relatively stable state. An isobutene polymer exhibits a low solubility in a polar solvent such as methyl chloride and methylene chloride at low temperatures. Thus, a hydrocarbon solvent may be incorporated in the polar solvent to increase the solubility of the isobutene polymer in the polar solvent. However, a report was made that the use of a mixture of methyl chloride and hexane wherein the proportion of hexane is not less than 40% causes chain transfer which appears in the form of two peaks on GPC chart (bimodal) (Polym. Bull., 21, 273 (1989)). The phenomenon that two peaks appear on GPC chart demonstrates the rise in the molecular weight distribution and is thus undesirable.

Further, JP-A-3-174403, JP-A-3-287605, and U.S. Patents 4,327,201 and 5,169,914 disclose that as a polymerization solvent there may be used an aliphatic organic solvent such as butane, pentane, hexane and heptane, aromatic organic solvent such as benzene, toluene and xylene, nitro compound such as nitromethane and nitroethane, halogenated organic solvent or mixture thereof without any restriction so far as it exerts no adverse effects on the polymerization activity of the initiator.

However, the examples in these patents merely give examples of a mixture of methylene chloride and hexane having a high polarity. Further, the resulting isobutene polymer contains a large number of indanyl groups as by-products. Thus, desirable polymers cannot be obtained. Moreover, as described in the comparative examples of the present application, the polymerization in the presence of hexane, which has a low polarity, produces an isobutene polymer having a molecular weight distribution (Mw/Mn) as extremely high as 7.02 and a large number of indanyl groups. It has thus been made clear that the foregoing polymerization process is not desirable.

An object of the present-invention is to solve the foregoing problems and thus provide a process for the preparation of an industrially favorable isobutene polymer.

### DISCLOSURE OF THE INVENTION:

The inventors found that the conventional problems can be solved by the use of a solvent having a specified dielectric constant. The inventors also found that the use of such a solvent makes it possible to obtain the desired isobutene polymer having a small molecular weight distribution without using the halogenated hydrocarbon which has heretofore been used. If no halogenated hydrocarbons are used, there arises no problem of the discharge of halogenated hydrocarbons. This advantageously provides a drastic reduction of facilities and cost required for disposal of waste water, making it possible to solve the foregoing problems (1) to (3) at once.

The present invention relates to a process for preparing an isobutene polymer having functional groups at the terminals at a temperature of from not lower than -100°C to not higher than 0°C from the following components as essential components:
(A) a cationically polymerizable monomer containing isobutene;
(B) an organic compound as an initiator/chain transfer agent represented by formula (1): 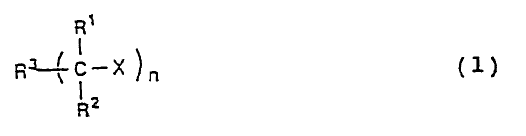 wherein X represents a halogen atom, an RO- group or an RCOO-group (in which R represents a monovalent organic group); R³ represents a polyvalent aromatic group or a substituted or unsubstituted polyvalent aliphatic hydrocarbon group; R¹ and R² may be the same or different and each represent a hydrogen atom or a substituted or unsubstituted monovalent hydrocarbon group, with the proviso that when R³ is a polyvalent aliphatic hydrocarbon group, one of R¹ and R² is not a hydrogen atom; and n represents an integer of from 1 to 6;
(C) an aprotic solvent free of halogenated hydrocarbon; and
(D) a Lewis acid selected from boron trichloride and titanium tetrachloride wherein the component (C) exhibits a dielectric constant of from not less than 2.0 to not more than 4.0 at a temperature of 20°C.

The component (C) contains preferably an aromatic hydrocarbon.

The component (C) is preferably a mixture of an aromatic hydrocarbon and an aliphatic hydrocarbon.

In a preferred embodiment the component (C) exhibits a dielectric constant of from not less than 2.0 to not more than 2.5 at a temperature of 20°C.

The aromatic hydrocarbon can be selected from the group consisting of benzene, toluene, xylene and ethylbenzene.

The concentration of the component (A) in the system is preferably from 5 to 40 wt%.

The component (B) may be selected from the group consisting of p-dicumyl chloride, m-dicumyl chloride, p-dicumyl methoxide, m-dicumyl methoxide, 1,3,5-tricumyl chloride and 1,3,5-tricumyl methoxide.

An electron donor may further be added as a component (E) in addition to the components (A) to (D).

The invention relates also to a process for preparing an isobutene polymer having carbon-carbon double bonds at the terminals, which comprises adding an allyl trimethylsilane in an amount of from 0.5 to 1.5 mol per mol of the group X in the component (B) before the formation of an isobutene polymer terminated by functional groups as described above or before the deactivation of the component (D) following the formation of the isobutene polymer.

The invention relates also to a process for preparing an isobutene polymer having carbon-carbon double bonds at the terminals, which comprises adding 1,9-decadiene in an amount of from 1.5 to 10.0 mol per mol of the group X in the component (B) before the formation of an isobutene polymer terminated by functional groups as described above or before the deactivation of the component (D) following the formation of the isobutene polymer.

In the present invention, the number-average molecular weight (Mn) of the isobutene polymer is usually from 500 to 300,000, preferably from 1,000 to 50,000. If Mn is smaller than 500, the excellent characteristics inherent to isobutene polymers are lost. On the contrary, if Mn exceeds 300,000, the resulting polymer is solid, extremely deteriorating its workability. The number-average molecular weight (Mn) and Mw/Mn value of the isobutene polymer were determined by GPC using a polystyrene gel column (Shodex K-804, manufactured by Showa Denko K.K.; mobile phase: chloroform) in polystyrene equivalence.

The term "cationically polymerizable monomer containing isobutene" as used herein is not limited to a monomer made only of isobutene but is meant to include a monomer the isobutene component of which is substituted by a cationically polymerizable monomer copolymerizable with isobutene in a proportion of not more than 50% by weight (hereinafter, simply referred to as "%").

Examples of the cationically polymerizable monomer copolymerizable with isobutene include olefins having 3 to 12 carbon atoms, conjugated dienes, vinyl ethers, aromatic vinyl compounds, norbornenes, and vinyl silanes. Preferred among these cationically polymerizable monomers are olefins having 3 to 12 carbon atoms and aromatic vinyl compounds.

Specific examples of the cationically polymerizable monomer copolymerizable with isobutene usually include propene, 1-butene, 2-butene, 2-methyl-1-butene, 3-methyl-1-butene, pentene, hexene, cyclohexene, vinyl cyclohexane, 5-ethylidenenorbornene, 5-propylidenenorbornene, butadiene, isoprene, cyclopentadiene, methyl vinyl ether, ethyl vinyl ether, isobutyl vinyl ether, vinyl carbazole, methoxystyrene, ethoxystyrene, t-butoxystyrene, hexenyloxystyrene, styrene, α-methylstyrene, methylstyrene, dimethylstyrene, chloromethylstyrene, chlorostyrene, indene, β-pinene, vinyltrichlorosilane, vinylmethyldichlorosilane, vinyldimethylchlorosilane, vinyldimethylmethoxysilane, vinyltrimethylsilane, divinyldichlorosilane, divinyldimethoxysilane, divinyldimethylsilane, 1,3-divinyl-1,1,3,3-tetramethyldisiloxane, trivinylmethylsilane, γ-methacryloyloxypropyltrimethoxysilane, and γ-methacryloyloxypropylmethyldimethoxysilane.

Preferred among these cationically polymerizable monomers are propene, 1-butene, 2-butene, cyclopentadiene, 5-ethylidenenorbornene, isobutyl vinyl ether, methoxystyrene, and styrene. One of these cationically polymerizable monomers copolymerizable with isobutene may be used in combination with isobutene. Two or more of these cationically polymerizable monomers may be used in combination.

In the present invention, the monomer concentration during polymerization is normally from 1 to 75 wt%, preferably from 5 to 60 wt%, more preferably from 10 to 40 wt%, most preferably from 15 to 30 wt%. If the monomer concentration is less than 1 wt%, the production efficiency is disadvantageously reduced, though causing no troubles on the polymerization itself. If the monomer concentration exceeds 75 wt%, the polymerization system is a precipitation system, making it impossible to obtain a good polymer.

Examples of the compound represented by the foregoing formula (1) of the present invention include a compound represented by formula (2):

AY₂ (2)

wherein A represents a group having 1 to 4 aromatic rings; Y represents a group represented by formula (3): 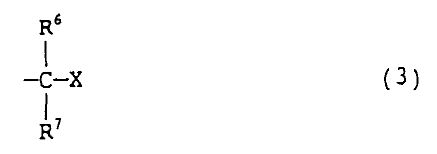 (in which R⁶ and R⁷ may be the same or different and each represent a hydrogen atom or a monovalent hydrocarbon group having 1 to 20 carbon atoms; X represents a halogen atom, an R⁴COO- group (R⁴ represents a hydrogen atom or an alkyl group having 1 to 5 carbon atoms) or an R⁵O- group (R⁵ represents a hydrogen atom or an alkyl group having 1 to 5 carbon atoms)); and n represents an integer of from 1 to 8;
a compound represented by formula (4):

BZₘ (4)

wherein B represents a substituted or unsubstituted hydrocarbon group having 4 to 40 carbon atoms; Z represents a halogen atom bonded to tertiary carbon atom, an R⁸COO- group (in which R⁸ represents a hydrogen atom or an alkyl group having 1 to 5 carbon atoms) or an R⁹O- group (in which R⁹ represents a hydrogen atom or an alkyl group having 1 to 5 carbon atoms); and m represents an integer of from 1 to 4; and an oligomer having α-halostyrene units. However, the present invention is not limited to these compounds. These compounds may be used singly or in combination.

In the compound represented by the formula (2), the group A having 1 to 4 aromatic rings may be either one produced by a condensation reaction or may be an uncondensed product. Examples of the group containing aromatic rings include phenyl, biphenyl, naphthyl, anthryl, phenanthryl, pyrenyl, di- to pentavalent groups derived from these groups, and mono- to hexavalent groups derived from Ph-(CH₂)₁-Ph (in which Ph represents a phenyl group, and 1 represents an integer of from 1 to 10). These groups having aromatic rings may be substituted by straight-chain and/or branched aliphatic hydrocarbon groups having 1 to 20 carbon atoms or groups containing a functional group such as hydroxyl group, ether group and vinyl group.

As the compound represented by the formula (4), there may also be used one having a functional group other than Z, such as vinyl group and silyl group.

Examples of the oligomer having an α-halostyrene unit, which can be used as the initiator/chain transfer agent, include oligomers of α-chlorostyrene, and oligomers obtained by the copolymerization of α-chlorostyrene with a monomer copolymerizable therewith.

In the present invention, the use of a compound having two or more halogen atoms, R⁴COO- groups (in which R⁴ represents a hydrogen atom or an alkyl group having 1 to 5 carbon atoms) or R⁵O- groups (in which R⁵ represents a hydrogen atom or an alkyl group having 1 to 5 carbon atoms) or a compound having a halogen atom, an R⁴COO- group or an R⁵O- group and other reactive functional groups, from among the compounds represented by the formula (1), as an initiator/chain transfer agent, can advantageously provide the resulting polymer with a higher functionality.

Specific examples of the compound represented by the foregoing formula (1), which can be usually employed, include the following compounds: 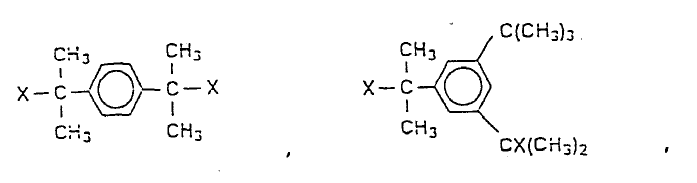 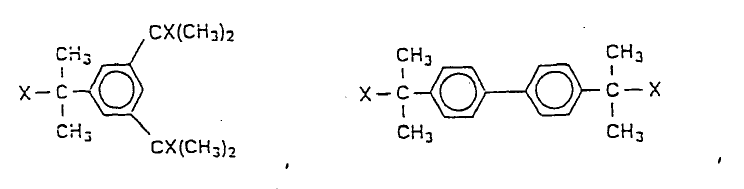 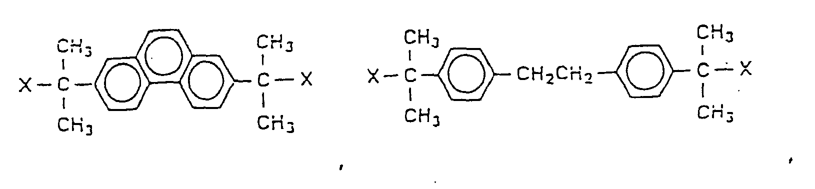 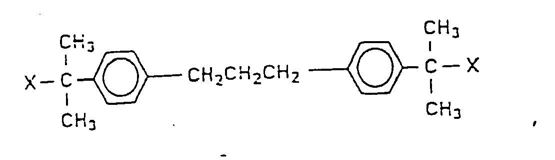 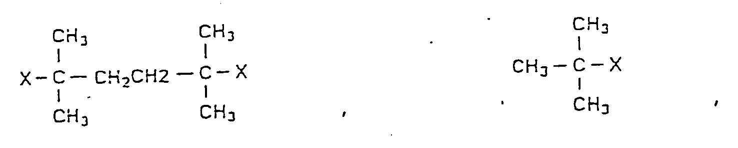 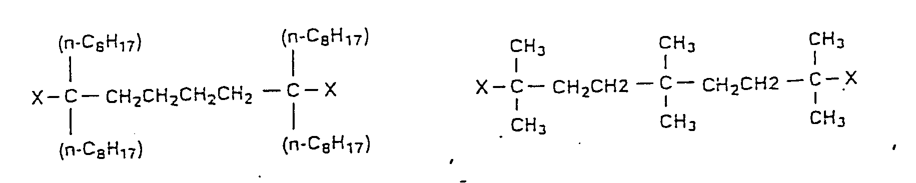 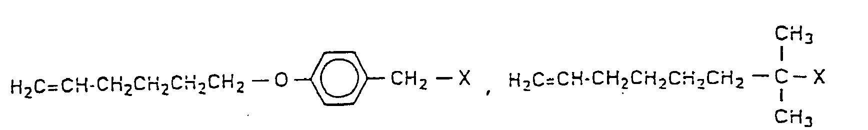 and 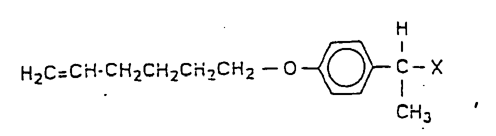 wherein X represents a halogen atom, an R⁴COO- group (in which R⁴ represents a hydrogen atom or an alkyl group having 1 to 5 carbon atoms) or an R⁵O- group (in which R⁵ represents a hydrogen atom or an alkyl group having 1 to 5 carbon atoms); and
oligomer of α-chlorostyrene. However, the present invention is not limited to these compounds. Preferred among these compounds are compounds such as 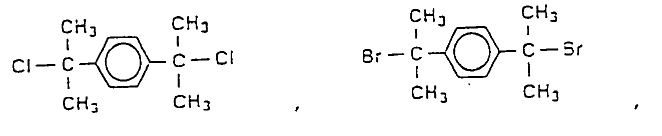 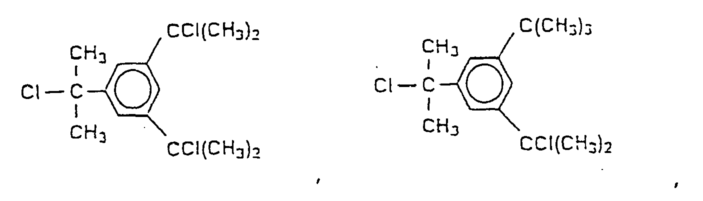 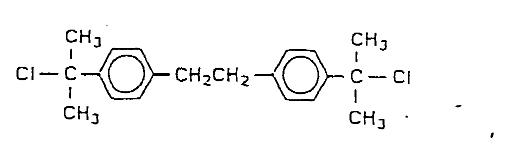 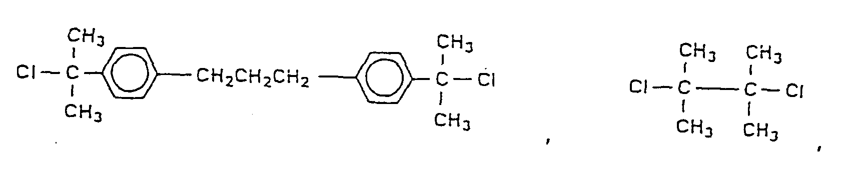 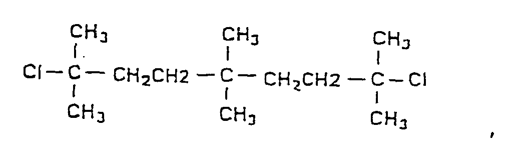 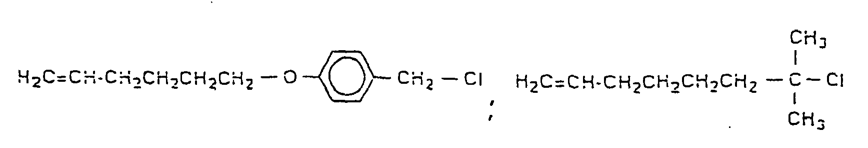 and 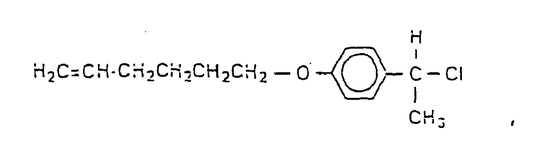 CH₃COO- group-containing compounds such as 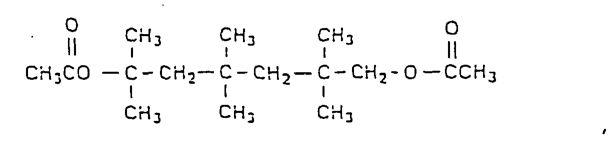 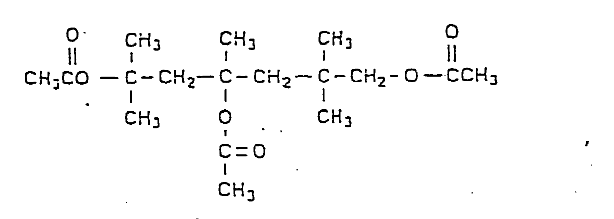 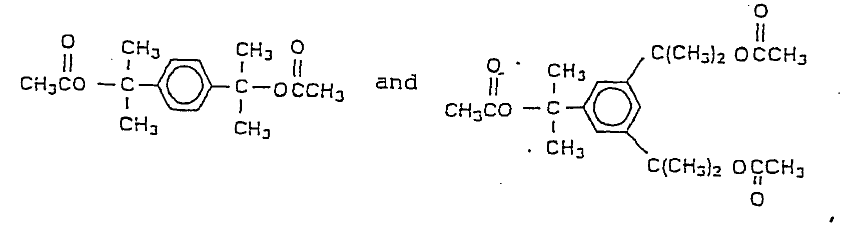 and CH₃O- group-containing compounds such as 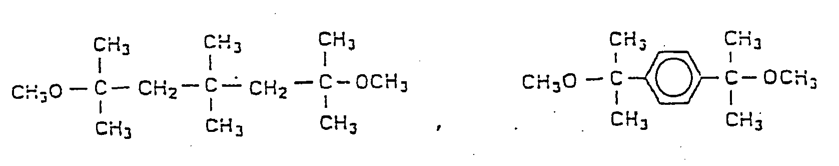 and

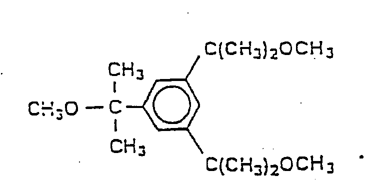

These compounds are components which are used as initiators/chain transfer agents. These compounds may be used singly or in admixture in the present invention. By controlling the amount of these compounds to be used, the number-average molecular weight of the resulting isobutene polymer can be arbitrarily predetermined.

In the present invention, the amount of the compound represented by the foregoing formula (1) to be used is usually from 0.01 to 20% by weight, preferably from 0.1 to 10% by weight based on the weight of the cationically polymerizable monomer containing isobutene.

The Lewis acids which can be used in the present invention are TiCl₄ and BCl₃.

In the present invention, the Lewis acid is usually used in an amount of from 0.1 to 100% by weight, preferably from 1 to 30% by weight based on the weight of the cationically polymerizable monomer containing isobutene. If the amount of the Lewis acid to be used as a catalyst component falls below 0.1% by weight, a problem arises that the yield of the product of the cationic polymerization reaction is reduced. On the contrary, if the amount of the Lewis acid exceeds 100% by weight, no merits can be obtained.

In the present invention, the aprotic solvent free of halogenated hydrocarbon, used as a polymerization solvent, should have a dielectric constant of from not less than 2.0 to not more than 4.0 at a temperature of 20°C. If the dielectric constant of the solvent falls below 2, a good isobutene polymer could not be obtained. (Therefore, pentane, hexane, etc. cannot be used as single solvent.)

Examples of the aprotic solvent free of halogenated hydrocarbon to be used as a polymerization solvent include butane, pentane, neopentane, hexane, cyclohexane, methylcyclohexane, ethylcyclohexane, heptane, octane, benzene, toluene, xylene, and ethylbenzene. Preferred among these aprotic solvents are toluene, hexane, and heptane.

Examples of the mixed solvent (mixing ratio (vol/vol)) include various combinations such as toluene/hexane (5/5 to 10/0), toluene/heptane (5/5 to 10/0), toluene/methylcyclohexane (5/5 to 10/0) and toluene/ethylcyclohexane (5/5 to 10/0). One of unexpected merits which have been made obvious in the course of the study in the present invention is the fact that the use of a solvent free of halogenated hydrocarbon makes it possible to obtain a good isobutene polymer even if the dielectric constant of the solvent is low. A low dielectric constant system tends to show a small temperature rise during polymerization reaction. Therefore, the problem of heat removal accompanied by scaling up the reaction can be easily solved.

In the present invention, the dielectric constant of the mixed solvent system can be approximately calculated by determining the additive mean (arithmetic mean) of the dielectric constant of the constituents over the mixing ratio of the constituents on a weight-average basis. The dielectric constant (typical value) of various solvents used for the calculation of the dielectric constant of the mixed solvent will be listed below.

Toluene: 2.24; ethylbenzene: 2.40; o-xylene: 2.27; m-xylene: 2.37; n-pentane: 1.84; n-hexane: 1.89; n-heptane: 1.92; methylcyclohexane: 2.02.

In the present invention, the polymerization solvent is free of halogenated hydrocarbon for the reason that waste water disposal facilities can be simplified. The term "solvent free of halogenated hydrocarbon" as used in the present application is meant to indicate a solvent which may contain halogenated hydrocarbon to an extent such that no special treatments for halogenated hydrocarbon in waste water or waste solvent generated from the catalyst deactivation and rinsing process after polymerization reaction are required.

In the present invention, an electron donor is preferably used as the component (E) to control side reactions more efficiently. As the electron donor component there may be widely used any known electron donor components having a donor number of from 15 to 50. Preferred examples of such electron donor components include pyridines, amines, amides, and sulfoxides.

Specific examples of the electron donor component usually include 2,6-di-t-butylpyridine, 2-t-butylpyridine, 2,4,6-trimethylpyridine, 2,6-dimethylpyridine, 2-methylpyridine, pyridine, diethylamine, trimethylamine, triethylamine, tributylamine, diethylamine, N,N-dimethylaniline, N,N-dimethylformamide, N,N-dimethylacetamide, N,N-diethylacetamide, dimethylsulfoxide, diethyl ether, methyl acetate, ethyl acetate, trimethyl phosphate, and triamide hexamethylphosphate. Preferred among these electron donor components are 2,6-di-t-butylpyridine, 2,6-dimethylpyridine, 2-methylpyridine, pyridine, diethylamine, trimethylamine, triethylamine, N,N-dimethylformamide, N,N-dimethylacetamide, and dimethylsulfoxide. Picolines are further preferred. Particularly preferred of these electron donors is α-picoline (2-methylpyridine), which can exert a remarkable effect despite of its small donor number.

In the present invention, the electron donor component is usually used in an amount of from 0.01 to 10 mol, preferably from 0.1 to 2 mol per mol of the group X in the compound represented by the general formula (1).

In the present invention, the polymerization reaction is not specifically limited and can be accomplished by any conventional polymerization method. Among the foregoing components, i.e., (A) cationically polymerizable monomer containing isobutene and (D) Lewis acid, a solution containing (D) a Lewis acid may be added to a solution of (A) a cationically polymerizable monomer containing isobutene in a batch process. Alternatively, a solution of (A) a cationically polymerizable monomer containing isobutylene may be continuously added to a solution containing (D) a Lewis acid in a semi-batch process. Further, a continuous process may be employed which comprises continuously charging all the foregoing components into the reaction system while withdrawing the reaction product.

In the present invention, the polymerization reaction can be followed by a substitution reaction or addition reaction on the functional terminal groups formed at the terminals of the polymer to produce an isobutene polymer having carbon-carbon double bonds at the terminals. In other words, the reaction of the resulting isobutene polymer, preferably at tertiary chlorine group end, with a specific end capping agent makes it easy to obtain a polymer having carbon-carbon double bonds at the terminals. In general, the functional terminal group is chiefly a tertiary halogen group. However, the foregoing isopropenyl group or internal olefin group may be included.

For example, in the conversion of chlorine group end to carbon-carbon double bond end by the substitution reaction using an allyl trimethylsilane, the desired carbon-carbon double bond end can be easily produced only by adding a required amount of an allyl trimethylsilane before the deactivation of the component (D). The reaction temperature is preferably as low as the polymerization temperature. Since the substitution reaction proceeds at a high rate at low temperatures, it is usually completed in 30 minutes. The amount of the allyl trimethylsilane to be used may be from 1.0 to 1.5 mol per mol of the group X in the component (B). If it is necessary to obtain a polymer having a small content of carbon-carbon double bonds, the amount of the allyl trimethylsilane added may be not more than 1 mol per mol of the group X. Since the allyl trimethylsilane doesn't take part in the polymerization reaction, it may be added to the reaction system before polymerization.

### [Reaction scheme]

P-C(CH₃)₂Cl → P-C(CH₃)₂CH₂CH=CH₂

wherein P represents a polymer residue.

Further, in the conversion of chlorine group end to carbon-carbon double bond end by the addition reaction using a non-conjugated diene such as 1,9-decadiene, the desired carbon-carbon double bond end can be easily produced only by adding a required amount of a non-conjugated diene before the deactivation of the component (D) as in the case where an allyl trimethylsilane is used. The addition reaction temperature is preferably as low as the polymerization temperature. The addition reaction at low temperatures is usually completed in about 6 hours. The amount of the non-conjugated diene to be used may be from 1.5 to 10.0 mol per mol of the group X in the component (B). If it is necessary to obtain a polymer having a small carbon-carbon double bond content, the reaction time may be reduced. Alternatively, the amount of 1,9-decadiene added may be not more than 1 mol per mol of the group X. In this system, a Lewis acid as the component (D) may be added, or the reaction temperature may be further lowered for the purpose of further reducing the addition reaction rate.

### [Reaction scheme]

P-C(CH₃)₂Cl → P-C(CH₃)₂CH₂CHCl(CH₂)₆CH=CH₂

wherein P represents a polymer residue.

### BEST MODE FOR CARRYING OUT THE INVENTION:

The present invention will be further described in the following examples, but the present invention should not be construed as being limited thereto.

### Example 1:

In a reaction vessel were charged 276 mℓ of toluene, 112 mℓ of an isobutene monomer, 1.156 g of p-DCC and 0.186 g of α-picoline. The reaction mixture was then stirred with the reaction vessel being surrounded by a dry ice-ethanol bath so that it was cooled to a temperature of -70°C. A mixture of 3.95 mℓ of TiCl₄ and 4 mℓ of toluene was then added to the reaction system to initiate reaction. After the completion of the reaction, the reaction solution was poured into a large amount of water with stirring so that it was washed. The resulting organic phase and aqueous phase were then separated from each other to remove the catalyst. The organic phase was then subjected to evaporation under reduced pressure to remove the volatile content. Thus, an isobutene polymer was obtained. The reaction conditions used and the properties of the polymer thus obtained are shown in Tables 1 and 2 below.

### Example 2:

The air in a 500-mℓ four-necked flask with a three-way cock was replaced by nitrogen. Into the vessel were charged 280 mℓ of toluene (which had been allowed to stand with molecular sieves 3A overnight or longer so that it was dried) and 2.31 g (10 mmol) of p-DCC through a syringe. To the three-way cock was then connected a pressure glass liquefied gas thief tube equipped with a needle valve in which 112 mℓ of an isobutene monomer had been charged. The polymerization vessel was then dipped in a -60°C dry ice/ethanol bath so that it was cooled. The system in the vessel was then evacuated by a vacuum pump. The needle valve was then opened so that the isobutene monomer was introduced from the liquefied gas thief tube into the polymerization vessel. Nitrogen gas was then introduced into the polymerization vessel from one of the three ways of the cock so that the pressure of the vessel was returned to normal value (atmospheric pressure). 0.186 g (2 mmol) of 2-methylpyridine was then charged into the polymerization vessel. 2.74 mℓ (25 mmol) of titanium tetrachloride was then added to the -60°C monomer solution to initiate polymerization. When 60 minutes passed since the initiation of the reaction, 3.42 g (30 mmol) of an allyl trimethylsilane was added to the reaction mixture. The reaction mixture was further allowed to undergo reaction at a temperature of -60°C for 120 minutes. The reaction solution was then washed with 200 mℓ of water four times. The solvent was then evaporated to obtain an isobutene polymer. The reaction conditions used and the properties of the resulting polymer are altogether shown in Tables 1 and 2.

### Example 3:

The air in a 300-mℓ four-necked flask with a three-way cock was replaced by nitrogen. Into the vessel were charged 112 mℓ of toluene (which had been allowed to stand with molecular sieves 3A overnight or longer so that it was dried), 49 mℓ of heptane (which had been allowed to stand with molecular sieves 3A overnight or longer so that it was dried), 1.16 g (5.0 mmol) of p-DCC and 0.093 g (1 mmol) of 2-methylpyridine through a syringe. To the three-way cock was then connected a pressure glass liquefied gas thief tube equipped with a needle valve in which 56 mℓ of an isobutene monomer had been charged. The polymerization vessel was then dipped in a -70°C dry ice/ethanol bath so that it was cooled. The system in the vessel was then evacuated by a vacuum pump. The needle valve was then opened so that the isobutene monomer was introduced from the liquefied gas thief tube into the polymerization vessel. Nitrogen gas was then introduced into the polymerization vessel from one of the three ways of the cock so that the pressure of the vessel was returned to normal value. 1.64 mℓ (15 mmol) of titanium tetrachloride was then added to the monomer solution to initiate polymerization. When 90 minutes passed since the initiation of the reaction, 1.15 g (10 mmol) of an allyl trimethylsilane was added to the reaction mixture. The reaction mixture was further allowed to undergo reaction at a temperature of -70°C for 90 minutes. The reaction solution was then washed with 200 mℓ of water four times. The solvent was then evaporated to obtain an isobutene polymer. The reaction conditions used and the properties of the resulting polymer are altogether shown in Tables 1 and 2.

### Example 4:

An isobutene polymer was produced in the same manner as in Example 3 except that 128 mℓ of toluene and 32 mℓ of heptane were used as solvents. The isobutene polymer thus produced was then evaluated in the same manner as in Example 3. The reaction conditions used and the properties of the resulting polymer are altogether shown in Tables 1 and 2. Example 5:

The air in a 500-mℓ four-necked flask with a three-way cock was replaced by nitrogen. Into the vessel were charged 255 mℓ of toluene (which had been allowed to stand with molecular sieves 3A overnight or longer so that it was dried), 112 mℓ of hexane (which had been allowed to stand with molecular sieves 3A overnight or longer so that it was dried) and 1.16 g (5.0 mmol) of p-DCC through a syringe. To the three-way cock was then connected a pressure glass liquefied gas thief tube equipped with a needle valve in which 112 mℓ of an isobutene monomer had been charged. The polymerization vessel was then dipped in a -70°C dry ice/ethanol bath so that it was cooled. The system in the vessel was then evacuated by a vacuum pump. The needle valve was then opened so that the isobutene monomer was introduced from the liquefied gas thief tube into the polymerization vessel. Nitrogen gas was then introduced into the polymerization vessel from one of the three ways of the cock so that the pressure of the vessel was returned to normal value. 0.186 g (2 mmol) of 2-methylpyridine was then added to the reaction system. 7 mℓ of a toluene solution of 2.76 mℓ (25 mmol) of titanium tetrachloride was then added to the reaction system to initiate polymerization. When the reaction was initiated, the temperature rise was 8.5°C. When 2 hours passed since the initiation of the reaction, 5.48 mℓ (50 mmol) of titanium tetrachloride and 13.83 g (100 mmol) of 1,9-decadiene were added to the reaction system. When 6 hours passed since the addition of 1,9-decadiene, the reaction solution was washed with 500 mℓ of water four times. The solvent was evaporated. The resulting isobutene polymer was then dissolved in a small amount of hexane. 1,000 mℓ of acetone was then added to the reaction solution with stirring so that the polymer separated out by the precipitation. The polymer thus obtained was dissolved in hexane. The volatile content was then evaporated to obtain an isobutene polymer. The reaction conditions used and the properties of the resulting polymer are altogether shown in Tables 1 and 2.

### Example 6:

The air in a 500-mℓ four-necked flask with a three-way cock was replaced by nitrogen. Into the vessel were charged 126 mℓ of toluene (which had been allowed to stand with molecular sieves 3A overnight or longer so that it was dried), 54 mℓ of methylcyclohexane (which had been allowed to stand with molecular sieves 3A overnight or longer so that it was dried) and 1.16 g (5.0 mmol) of p-DCC through a syringe. To the three-way cock was then connected a pressure glass liquefied gas thief tube equipped with a needle valve in which 56 mℓ of an isobutene monomer had been charged. The polymerization vessel was then dipped in a -70°C dry ice/ethanol bath so that it was cooled. The system in the vessel was then evacuated by a vacuum pump. The needle valve was then opened so that the isobutene monomer was introduced from the liquefied gas thief tube into the polymerization vessel. Nitrogen gas was then introduced into the polymerization vessel from one of the three ways of the cock so that the pressure of the vessel was returned to normal value. 0.093 g (1 mmol) of 2-methylpyridine was then added to the reaction system. 1.65 mℓ (15.1 mmol) of titanium tetrachloride was then added to the reaction system to initiate polymerization.

When 70 minutes passed since the initiation of the reaction, 1.24 g (10.8 mmol) of an allyl trimethylsilane was added to the reaction system. The reaction system was further allowed to undergo reaction at a temperature of -70°C for 90 minutes. The reaction solution was then washed with 400 mℓ of water four times. The solvent was evaporated. The resulting isobutene polymer was then dissolved in a small amount of hexane. 500 mℓ of acetone was then added to the solution with stirring so that the polymer separated out by the precipitation. The polymer thus obtained was dissolved in hexane. The volatile content was then evaporated to obtain an isobutene polymer. The reaction conditions used and the properties of the resulting polymer are altogether shown in Tables 1 and 2.

### Example 7:

An isobutene polymer was produced in the same manner as in Example 1 except that 28 mℓ of an isobutene monomer, 0.289 g of p-DCC and 0.047 g of α-picoline were charged into the reaction system. The isobutene polymer thus produced was then evaluated in the same manner as in Example 1. The reaction conditions used and the properties of the polymer thus obtained are altogether shown in Tables 1 and 2. The maximum temperature rise during reaction was 5°C.

### Example 8:

An isobutene polymer was produced in the same manner as in Example 7 except that the polymerization temperature was -50°C. The isobutene polymer thus produced was then evaluated in the same manner as in Example 7. The reaction conditions used and the properties of the resulting polymer are altogether shown in Tables 1 and 2.

### Example 9:

An isobutene polymer was produced in the same manner as in Example 7 except that 248 mℓ of toluene and 28 mℓ of hexane were charged into the reaction vessel. The isobutene polymer thus produced was then evaluated in the same manner as in Example 7. The reaction conditions used and the properties of the polymer thus obtained are altogether shown in Tables 1 and 2.

### Comparative Example 1:

Into a reaction vessel were charged 276 mℓ of hexane, 28 mℓ of an isobutene monomer, 0.289 g of p-DCC and 0.047 g of α-picoline. The reaction mixture was then stirred with the reaction vessel being surrounded by a dry ice-ethanol bath so that it was cooled to a temperature of -70°C. A mixture of 7.9 mℓ of TiCl₄ and 4 mℓ of hexane was then added to the reaction system to initiate reaction. After the completion of the reaction, the reaction solution was poured into a large amount of water with stirring so that it was washed. The resulting organic phase and aqueous phase were then separated from each other to remove the catalyst. The organic phase was then subjected to evaporation under reduced pressure to remove the volatile content. Thus, an isobutene polymer was obtained. The reaction conditions used and the properties of the polymer thus obtained are altogether shown in Tables 1 and 2 below.

### Comparative Example 2:

Into a reaction vessel were charged 28 mℓ of methane dichloride and 244 mℓ of hexane. The other conditions were the same as used in Example 10. A solution of 3.95 mℓ of a catalyst in 8 mℓ of hexane was then poured into the reaction vessel to initiate reaction. Thus, a polymer product was obtained. The reaction conditions used and the properties of the resulting polymer are altogether shown in Tables 1 and 2 below.

### Comparative Example 3:

A reaction was effected in the same manner as in Example 12 except that 160 mℓ of methane dichloride, 112 mℓ of hexane and 0.578 g of p-DCC were charged into the reaction vessel. Thus, a polymer product was obtained. The reaction conditions used and the properties of the resulting polymer are altogether shown in Tables 1 and 2 below. The molecular weight of the polymer product and its distribution were measured by GPC analysis. As a result, low molecular by-products were detected in a molar fraction of 0.2. The maximum temperature rise during reaction was 9°C.

### Comparative Example 4:

A reaction was effected in the same manner as in Comparative Example 3 except that 188 mℓ of methane dichloride and 84 mℓ of hexane were charged into the reaction vessel. Thus, a polymer product was obtained. The reaction conditions used and the properties of the resulting polymer are altogether shown in Tables 1 and 2 below. The molecular weight of the polymer product and its distribution were measured by GPC analysis. As a result, low molecular by-products were detected in a molar fraction of 0.4. The maximum temperature rise during reaction was 10°C.

**Table 1**

| | Solvent (charged amount (mℓ)) | Dielectric Constant | Monomer Concentration (wt%) |
|---|---|---|---|
| Example 1 | toluene (276) | 2.2 | 24 |
| | | | |
| Example 2 | toluene (280) | 2.2 | 24 |
| | | | |
| Example 3 | toluene (112), heptane (49) | 2.2 | 36 |
| | | | |
| Example 4 | toluene (128), heptane (32) | 2.2 | 36 |
| | | | |
| Example 5 | toluene (262), hexane (112) | 2.2 | 20 |
| | | | |
| Example 6 | toluene (126), methylcyclohexane (54) | 2.2 | 20 |
| | | | |
| Example 7 | toluene (276) | 2.2 | 7 |
| | | | |
| Example 8 | toluene (276) | 2.2 | 7 |
| | | | |
| Example 9 | toluene (248), hexane (28) | 2.2 | 8 |
| | | | |
| Comparative Example 1 | hexane (276) | 1.9 | 9 |
| | | | |
| Comparative Example 2 | methylene chloride (28), hexane (252) | 3.0 | 8 |
| | | | |
| Comparative Example 3 | methylene chloride (168), hexane (112) | 6.3 | 6 |
| | | | |
| Comparative Example 4 | methylene chloride (196), hexane (84) | 6.7 | 6 |

It can be seen from the results shown in Table 1 that Examples 1 to 9, wherein an aprotic solvent free of halogenated hydrocarbon was used as a polymerization solvent, exhibit a dielectric constant of from not less than 2.0 to not more than 4.0.

**Table 2**

| | GPC | | NMR | | |
|---|---|---|---|---|---|
| | Mn | Mw/Mn | Fn(C=C)¹⁾ | Fn(indanyl)²⁾ | Mn(cal.) |
| Example 1 | 16,000 | 1.13 | - | 0.16 | - |
| Example 2 | 7,200 | 1.24 | 1.95 | 0.0 | 9,100 |
| Example 3 | 7,700 | 1.36 | 2.09 | 0.0 | 8,700 |
| Example 4 | 7,900 | 1.32 | 2.02 | 0.0 | 8,800 |
| Example 5 | 16,700 | 1.27 | 1.84 | 0.0 | 19,500 |
| Example 6 | 8,800 | 1.37 | 1.90 | 0.0 | 9,600 |
| Example 7 | 14,600 | 1.12 | - | 0.17 | - |
| Example 8 | 14,300 | 1.2 | - | 0.18 | - |
| Example 9 | 16,100 | 1.10 | - | 0.14 | - |
| Comparative Example 1 | 1,550 | 7.02 | - | 0.87 | - |
| Comparative Example 2 | 2,060 | 7.44 | - | 0.60 | - |
| Comparative Example 3 | 9,310 | 1.75 | - | 0.21 | - |
| Comparative Example 4 | 9,270 | 1.6 | - | 0.26 | - |

| | | | | | |
|---|---|---|---|---|---|
| Note 1) Average by number of carbon-carbon double bonds contained in one molecule of isobutene polymer | | | | | |
| 2) Average by number of indanyl groups contained in one molecule of isobutene polymer | | | | | |

The results in Table 2 show that a solvent system having a high monomer concentration free of halogenated hydrocarbon can provide an isobutene polymer having a low Mw/Mn ratio and a high terminal functionality. It can be also seen from the results of Comparative Example 1 that a solvent system comprising hexane alone cannot provide a good polymer.

### INDUSTRIAL APPLICABILITY:

(1) By selecting a specific solvent system, it is made possible to prevent the resulting polymer from being precipitated and enhance the monomer concentration during polymerization.
(2) By selecting a specific solvent system, it is made possible to obtain a good polymer having a narrow molecular weight distribution and a small number of indanyl groups.
(3) If a solvent free of halogenated hydrocarbon is used, no special treatments for halogenated hydrocarbon in waste water or waste solvent generated from the catalyst deactivation and rinsing process after polymerization reaction are required.

## Claims

1. A process for preparing an isobutene polymer having functional groups at the terminals at a temperature of from not lower than -100°C to not higher than 0°C from the following components as essential components:
(A) a cationically polymerizable monomer containing isobutene;
(B) an organic compound as an initiator/chain transfer agent represented by formula (1): 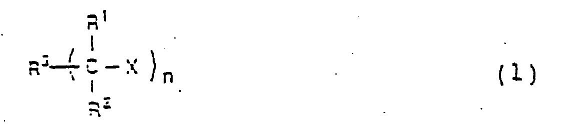 wherein X represents a halogen atom, RO- group or RCOO- group (in which R represents a monovalent organic group); R³ represents a polyvalent aromatic group or substituted or unsubstituted polyvalent aliphatic hydrocarbon group; R¹ and R² may be the same or different and each represent a hydrogen atom or substituted or unsubstituted monovalent hydrocarbon group, with the proviso that when R³ is a polyvalent aliphatic hydrocarbon group, one of R¹ and R² is not a hydrogen atom; and n represents an integer of from 1 to 6;
(C) an aprotic solvent free of halogenated hydrocarbon; and
(D) a Lewis acid selected from boron trichloride and titanium tetrachloride;
wherein said component (C) exhibits a dielectric constant of from not less than 2.0 to not more than 4.0 at a temperature of 20°C.

2. The process for preparing an isobutene polymer terminated by functional groups according to Claim 1, wherein said component (C) contains an aromatic hydrocarbon.

3. The process for preparing an isobutene polymer terminated by functional groups according to Claim 1 or 2, wherein said component (C) is a mixture of an aromatic hydrocarbon and an aliphatic hydrocarbon.

4. process for preparing an isobutene polymer terminated by functional groups according to any one of Claims 1 to 3, wherein said component (C) exhibits a dielectric constant of from not less than 2.0 to not more than 2.5 at a temperature of 20°C.

5. The process for preparing an isobutene polymer terminated by functional groups according to any one of Claims 2 to 4, wherein said aromatic hydrocarbon is selected from the group consisting of benzene, toluene, xylene and ethylbenzene.

6. The process for preparing an isobutene polymer terminated by functional groups according to any one of Claims 1 to 5, wherein the concentration of said component (A) in the system is from 5 to 40 wt%.

7. The process for preparing an isobutene polymer terminated by functional groups according to any one of Claims 1 to 6, wherein said component (B) is selected from the group consisting of p-dicumyl chloride, m-dicumyl chloride, p-dicumyl methoxide, m-dicumyl methoxide, 1,3,5-tricumyl chloride and 1,3,5-tricumyl methoxide.

8. The process for preparing an isobutene polymer terminated by functional groups according to any one of Claims 1 to 7, wherein an electron donor is further added as a component (E) in addition to said components (A) to (D).

9. A process for preparing an isobutene polymer having carbon-carbon double bonds at the terminals, which comprises adding an allyl trimethylsilane in an amount of from 0.5 to 1.5 mol per mol of the group X in said component (B) before the formation of an isobutene polymer terminated by functional groups according to any one of Claims 1 to 8 or before the deactivation of said component (D) following the formation of said isobutene polymer.

10. A process for preparing an isobutene polymer having carbon-carbon double bonds at the terminals, which comprises adding 1,9-decadiene in an amount of from 1.5 to 10.0 mol per mol of the group X in said component (B) before the formation of an isobutene polymer terminated by functional groups according to any one of Claims 1 to 8 or before the deactivation of said component (D) following the formation of said isobutene polymer.

## Patentansprüche

1. Verfahren zur Herstellung eines Isobutenpolymers, das endständige funktionelle Gruppen aufweist, bei einer Temperatur nicht unterhalb von -100°C bis nicht oberhalb von 0°C aus den folgenden Komponenten als wesentlichen Komponenten:
(A) ein kationisch polymerisierbares Monomer, das Isobuten enthält;
(B) eine organische Verbindung als Initiator/Kettenübertragungsreagens, dargestellt durch die Formel (I) 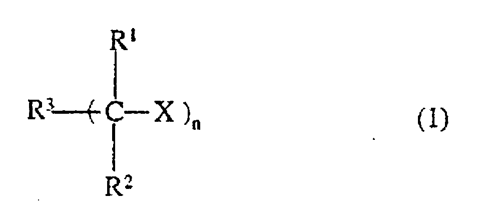 wobei X ein Halogenatom, einen RO-Rest oder RCOO-Rest darstellt (wobei R einen einwertigen organischen Rest darstellt); R³ einen mehrwertigen aromatischen Rest oder einen substituierten oder unsubstituierten mehrwertigen aliphatischen Kohlenwasserstoffrest darstellt; R¹ und R², die gleich oder verschieden sein können, ein Wasserstoffatom oder einen substituierten oder unsubstituierten einwertigen Kohlenwasserstoffrest darstellen, mit der Maßgabe, dass, falls R³ ein mehrwertiger aliphatischer Kohlenwasserstoffrest ist, entweder Rinder R² kein Wasserstoffatom ist; und n eine ganze Zahl von 1 bis 6 darstellt;
(C) ein aprotisches Lösungsmittel, das frei von halogenierten Kohlenwasserstoffen ist; und
(D) eine Lewissäure, ausgewählt aus Bortrichlorid und Titantetrachlorid;
wobei die Komponente (C) eine Dielektrizitätskonstante von nicht weniger als 2,0 bis nicht mehr als 4,0 bei einer Temperatur von 20°C aufweist.

2. Verfahren zur Herstellung eines durch funktionelle Gruppen abgeschlossenen Isobutenpolymers gemäß Anspruch 1, wobei Komponente (C) einen aromatischen Kohlenwasserstoff enthält.

3. Verfahren zur Herstellung eines durch funktionelle Gruppen abgeschlossenen Isobutenpolymers gemäß Anspruch 1 oder 2, wobei Komponente (C) eine Mischung aus einem aromatischen Kohlenwasserstoff und einem aliphatischen Kohlenwasserstoff ist.

4. Verfahren zur Herstellung eines durch funktionelle Gruppen abgeschlossenen Isobutenpolymers gemäß einem der Ansprüche 1 bis 3, wobei Komponente (C) eine Dielektrizitätskonstante von nicht weniger als 2,0 bis nicht mehr als 2,5 bei einer Temperatur von 20°C aufweist.

5. Verfahren zur Herstellung eines durch funktionelle Gruppen abgeschlossenen Isobutenpolymers gemäß einem der Ansprüche 2 bis 4, wobei der aromatische Kohlenwasserstoff ausgewählt ist aus Benzol, Toluol, Xylol und Ethylbenzol.

6. Verfahren zur Herstellung eines durch funktionelle Gruppen abgeschlossenen Isobutenpolymers gemäß einem der Ansprüche 1 bis 5, wobei die Konzentration der Komponente (A) im System bei 5 bis 40 Gew.-% liegt.

7. Verfahren zur Herstellung eines durch funktionelle Gruppen abgeschlossenen Isobutenpolymers gemäß einem der Ansprüche 1 bis 6, wobei Komponente (B) ausgewählt ist aus p-Dicumylchlorid, m-Dicumylchlorid, p-Dicumylmethoxid, m-Dicumylmethoxid, 1,3,5-Tricumylchlorid und 1,3,5-Tricumylmethoxid.

8. Verfahren zur Herstellung eines durch funktionelle Gruppen abgeschlossenen Isobutenpolymers gemäß einem der Ansprüche 1 bis 7, wobei weiterhin ein Elektronendonor als Komponente (E) zusätzlich zu den Komponenten (A) bis (D) zugegeben wird.

9. Verfahren zur Herstellung eines Isobutenpolymers, das endständige Kohlenstoff-Kohlenstoff-Doppelbindungen trägt, umfassend die Zugabe eines Allyltrimethylsilans in einer Menge von 0,5 bis 1,5 Mol pro Mol des Restes X in Komponente (B) vor der Erzeugung eines durch funktionelle Gruppen abgeschlossenen Isobutenpolymers gemäß einem der Ansprüche 1 bis 8 oder vor der Deaktivierung der Komponente (D), die der Erzeugung des Isobutenpolymers folgt.

10. Verfahren zur Herstellung eines Isobutenpolymers, das endständige Kohlenstoff-Kohlenstoff-Doppelbindungen trägt, umfassend die Zugabe von 1,9-Decadien in einer Menge von 1,5 bis 10,0 Mol pro Mol des Restes X in Komponente (B) vor der Erzeugung eines durch funktionelle Gruppen abgeschlossenen Isobutenpolymers gemäß einem der Ansprüche 1 bis 8 oder vor der Deaktivierung der Komponente (D), die der Erzeugung des Isobutenpolymers folgt.

## Revendications

1. Procédé pour la préparation d'un polymère d'isobutène présentant des groupes fonctionnels aux terminaisons à une température d'au moins -100°C à au plus 0°C à partir des constituants suivants en tant que constituants essentiels :
(A) un monomère cationiquement polymérisable contenant de l'isobutène ;
(B) un composé organique en tant qu'initiateur/agent de transfert des chaîne représenté par la formule (1) 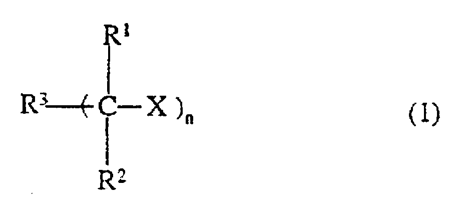 dans laquelle X représente un atome d'halogène, un groupe RO- ou un groupe RCOO- (dans lequel R représente un groupe organique monovalent) ; R³ représente un groupe aromatique polyvalent ou un groupe hydrocarboné aliphatique polyvalent substitué ou non substitué ; R¹ et R² peuvent être identiques ou différents et représentent chacun un atome d'hydrogène ou un groupe hydrocarboné monovalent substitué ou non substitué, à la condition que lorsque R³ est un groupe hydrocarboné aliphatique polyvalent, un parmi R¹ et R² n'est pas un atome d'hydrogène ; et n représente un nombre entier de 1 à 6 ;
(C) un solvant aprotique exempt d'hydrocarbure halogéné ; et
(D) un acide de Lewis, choisi parmi le trichlorure de bore et le tétrachlorure de titane ;
dans lequel ledit constituant (C) présente une constante diélectrique d'au moins 2,0 à au plus 4,0 à une température de 20°C.

2. Procédé pour la préparation d'un polymère d'isobutène terminé par des groupes fonctionnels selon la revendication 1, dans lequel ledit constituant (C) contient un hydrocarbure aromatique.

3. Procédé pour la préparation d'un polymère d'isobutène terminé par des groupes fonctionnels selon la revendication 1 ou 2, dans lequel ledit constituant (C) est un mélange d'un hydrocarbure aromatique et d'un hydrocarbure aliphatique.

4. Procédé pour la préparation d'un polymère d'isobutène terminé par des groupes fonctionnels selon l'une quelconque des revendications 1 à 3, dans lequel ledit constituant (C) présente une constante diélectrique d'au moins 2,0 à au plus 2,5 à une température de 20°C.

5. Procédé pour la préparation d'un polymère d'isobutène terminé par des groupes fonctionnels selon l'une quelconque des revendications 2 à 4, dans lequel ledit hydrocarbure aromatique est choisi parmi le benzène, le toluène, le xylène et l'éthylbenzène.

6. Procédé pour la préparation d'un polymère d'isobutène terminé par des groupes fonctionnels selon l'une quelconque des revendications 1 à 5, dans lequel la concentration dudit constituant (A) dans le système est de 5 à 40 % en poids.

7. Procédé pour la préparation d'un polymère d'isobutène terminé par des groupes fonctionnels selon l'une quelconque des revendications 1 à 6, dans lequel ledit constituant (B) est choisi parmi le chlorure de p-dicumyle, le chlorure de m-dicumyle, le p-dicumylméthoxyde, le m-dicumylméthoxyde, le chlorure de 1,3,5-tricumyle et le 1,3,5-tricumylméthoxyde.

8. Procédé pour la préparation d'un polymère d'isobutène terminé par des groupes fonctionnels selon l'une quelconque des revendications 1 à 7, dans lequel un donneur d'électrons est en outre ajouté en tant que constituant (E) en plus desdits constituants (A) à (D).

9. Procédé pour la préparation d'un polymère d'isobutène présentant des doubles liaisons carbone-carbone aux terminaisons, lequel comprend l'addition d'un allyltriméthylsilane dans une quantité de 0,5 à 1,5 mole par mole du groupe X dans ledit constituant (B) avant la formation d'un polymère d'isobutène terminé par des groupes fonctionnels selon l'une quelconque des revendications 1 à 8 ou avant la désactivation dudit constituant (D) suivant la formation dudit polymère d'isobutène.

10. Procédé pour la préparation d'un polymère d'isobutène présentant des doubles liaisons carbone-carbone aux terminaisons, lequel comprend l'addition de 1,9-décadiène dans une quantité de 1,5 à 10,0 mole par mole du groupe X dans ledit constituant (B) avant la formation d'un polymère d'isobutène terminé par des groupes fonctionnels selon l'une quelconque des revendications 1 à 8 ou avant la désactivation dudit constituant (D) suivant la formation dudit polymère d'isobutène.
